Europäisches Patentamt

**European Patent Office**

Office européen des brevets

(19)

(11) Publication number: **0 212 012**
**B1**

## EUROPEAN PATENT SPECIFICATION

(45) Date of publication of the patent specification:
28.02.90

(51) Int. Cl.⁴: **H05B 3/00**

(21) Application number: 85305553.1

(22) Date of filing: 05.08.85

(54) Automatic circuit control for electrical resistance cooking apparatus.

(43) Date of publication of application:
04.03.87 Bulletin 87/10

(45) Publication of the grant of the patent:
28.02.90 Bulletin 90/9

(84) Designated Contracting States:
AT BE CH DE FR GB IT LI LU NL SE

(56) References cited:
DE-B- 1 654 922
US-A- 2 642 794
US-A- 3 167 431
US-A- 3 651 753
US-A- 3 842 724
US-A- 4 244 284
US-A- 4 554 440

(73) Proprietor: Lee, Maurice W. Jr., P.O. Box 25, Boley
Oklahoma 74829(US)

(72) Inventor: Lee, Maurice W. Jr., P.O. Box 25, Boley
Oklahoma 74829(US)

(74) Representative: Wombwell, Francis et al, Potts, Kerr &
Co. 15, Hamilton Square, Birkenhead Merseyside
L41 6BR(GB)

ACTORUM AG

## Description

The pesent invention relates to electrical resistance cooking and more particularly, but not by way of limitation, to a method of cooking food and a circuit detecting and interrupting the current at an optimum point in the cooking cycle.

This invention also relates to United States Patent US-A 3 167 431 which discloses a housing containing a pair of electrodes underlying a third electrode for receiving a quantity of food stuff, such as ground meat, between the electrodes to be cooked by the electrical resistance of the food. A source of electrical energy is connected with the pair of electrodes to complete a circuit through the food and the third electrode. This apparatus functions as intended, however, it is difficult to determine the exact point in the cooking cycle where the circuit must be opened to achieve an optimum palatable condition of the food. If the current continues beyond a point in which the food has been completely cooked, arcing occurs resulting in an undesirable taste, burning and smell of the cooked food.

The circuit of this invention is responsive to the current flowing continuously, without interruption, through the food until the desired cooked condition "doneness" is reached and automatically discontinues the current thereby ceasing cooking at the optimum cooked condition of the food and preventing undercooking or overcooking and provides a manual preselection of the "done" condition of the food with an override control for restarting or continued cooking or discontinuing the current in the event of malfunction or at the will of the operator.

The invention is illustrated in the accompanying drawings in which,

Figure 1 is a vertical cross sectional view of a prior art resistance cooking apparatus (US-A 3 167 431);

Figure 2 is an approximate current value diagram;

Figure 2A is a diagram, similar to Fig. 2, of four separately cooked quantities of ground meat;

Figure 2B is a current value diagram illustrating rate of current change at preselected cooked conditions of food;

Figure 3 is a wiring diagram of one embodiment; and,

Figure 4 is a wiring diagram of another embodiment.

Referring more particularly to the prior art (US-A 3 167 431) resistance cooker illustrated by Fig. 1, the reference numeral 20 indicates the base of a housing having an overlying hingedly connected lid 21. The base supports, in electrically insulated relation, a pair of laterally spaced electrodes 22 and 23 and a third electrode 24 in overlying vertically spaced relation with respect to the pair of electrodes 22 and 23 for receiving a quantity of food stuff, such as ground meat, not shown, therebetween. This plate arrangement may be reversed as shown by the wiring diagram. The base 20 further supports a grease receiving receptacle 25. A source of electrical energy, indicated by the wires 26 and 27, is connected with the pair of electrodes 22 and 23.

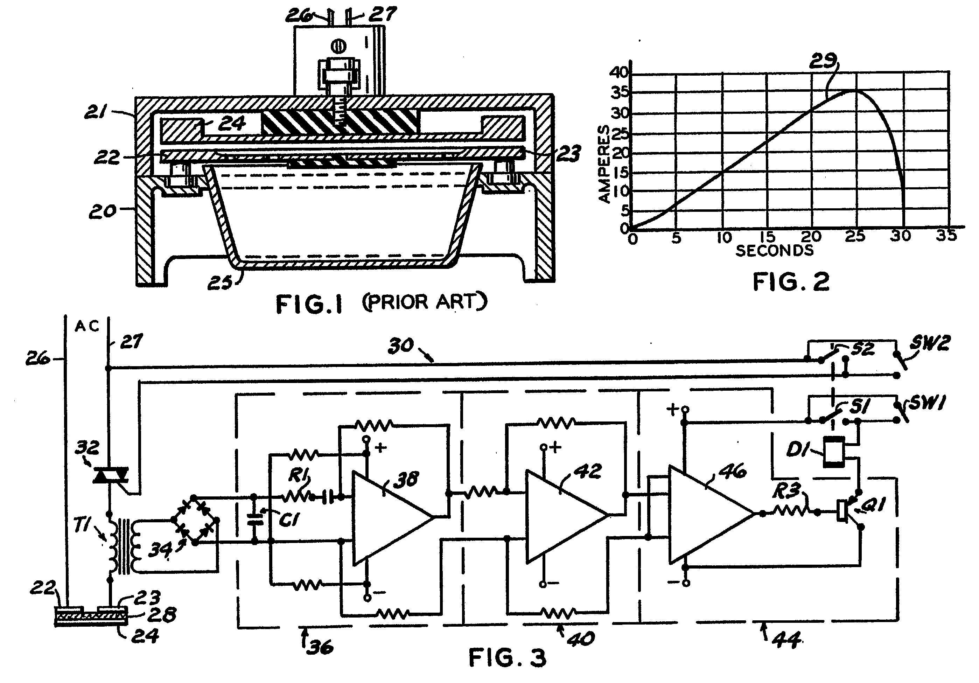

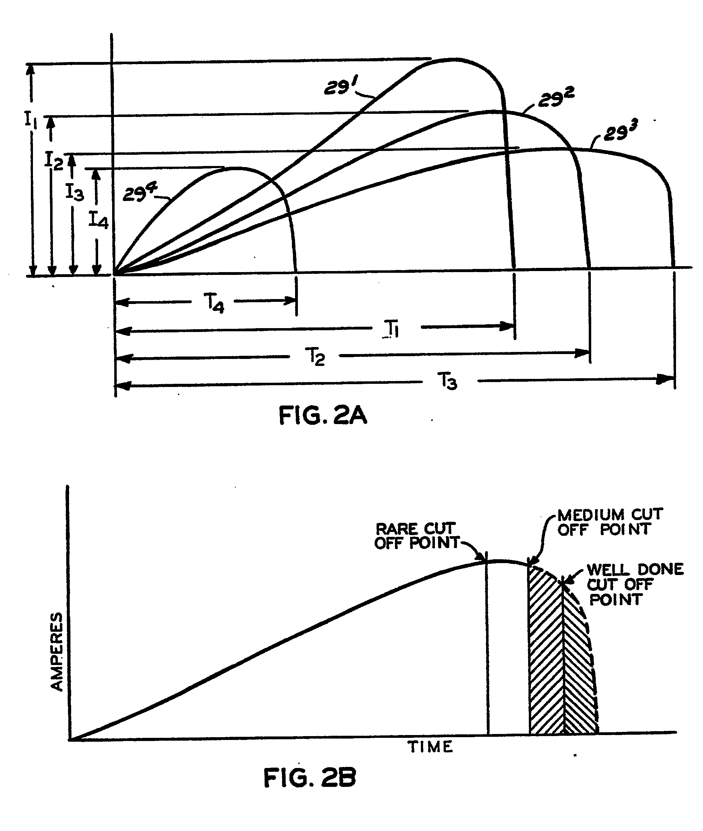

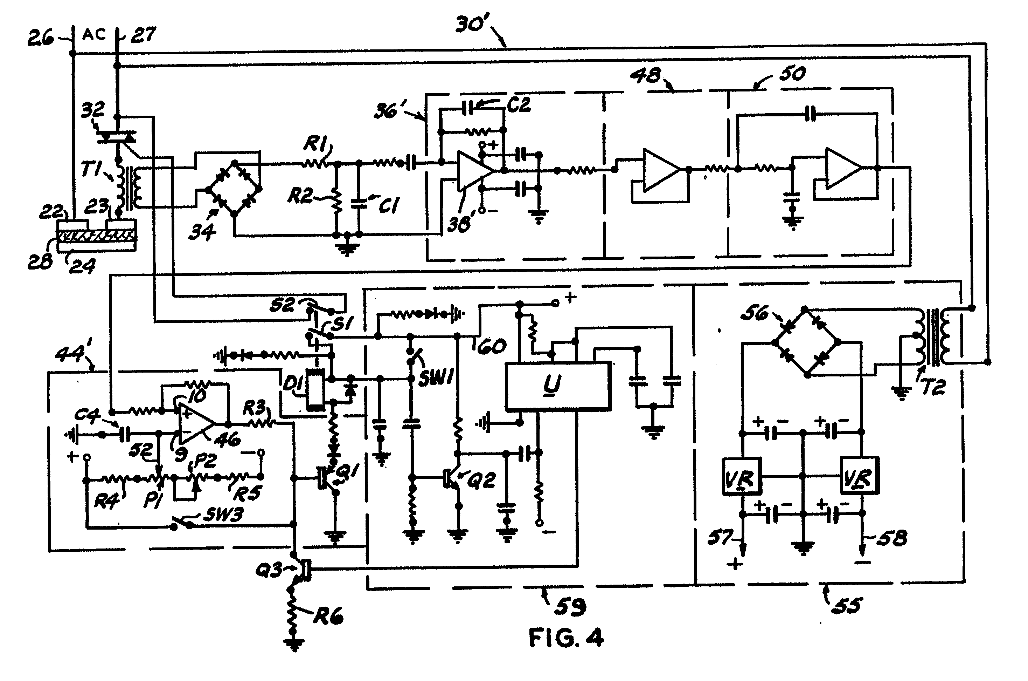

The curve 29 of Fig. 2 illustrates the approximate current values when the resistance cooker is operated with food, such as a ground meat patty 28, interposed between the electrodes 22-23 and 24. The current starts at zero and gradually rises each second to a peak of approximately 35 amperes at the end of approximately 25 seconds. The current then declines sharply in comparison to its rise. Time is not a controlling factor and it varies with the mass and ingredients of the food stuff, as is illustrated by the curves $29^1$ through $29^4$ of Fig. 2A. This figure (2A) clearly illustrates the rate of current (I) change with time (T) in accordance with the diameter, thickness and chemical content of the food stuff. In the four cooking examples represented by the curves $29^1$ through $29^4$ only the shape of the curve, which represents the RMS (root mean square) values of the current through the food stuff, remains constant. This invention does not alter this current curve but recognizes the shape and stops the flow through the food stuff at the optimum point of doneness as contrasted with prior art devices which temporarily interrupt the current during cooking for power control and thus alters the shape of this curve without stopping the cooking process or which stops cooking thermostatically. The optimum cooking of the food 28 is substantially complete at a point near the maximum amperage or current peak.

As mentioned hereinabove, when operating the resistance cooker manually it is very difficult to determine the exact point where the current must be discontinued to obtain the preferred done condition of the food.

Figure 3 illustrates a circuit 30 for detecting the current peak and discontinuing the current to discontinue the cooking of food, such as the ground meat patty 28, in accordance with the desired doneness and many variables, such as the diameter and thickness of the patty, moisture, fat and chemical content. The circuit 30 detects current through the wire 27.

A triac 32 (bidirectional triode thyristor) is connected in series in the wire 27 and acts as a current valve as current is applied to or removed from its gate, biases it off and on, to discontinue or allow current through the wire 27, as presently explained.

A transformer T1 has its primary winding connected in series in the wire 27 between the triac and the electrode 23. The voltage drop across the primary is a direct reflection of the current passing through the food.

The secondary winding voltage is rectified by a diode bridge arranged as a full wave rectifier 34 with the rectified voltage reduced and filtered by a resistor R1 and a capacitor C1 and amplified to a differentiating circuit 36 including an operational amplifier 38. The signal from the differentiating circuit 36 is fed to a buffer circuit 40 including a second operational amplifier 42. The signal from the amplifier 42 is fed to a comparator circuit 44 including an amplifier 46 having its output signal connected through a resistor R3 to the base of a PNP transistor Q1.

The collector of the transistor Q1 is connected with the negative voltage supply of the comparator amplifier 46. The emitter of the transistor Q1 is connected with one end of the coil of a normally open double-pole single-throw relay D1. The other end of the relay coil is connected with the positive current supply of the comparator amplifier 46 through one terminal S1 of the relay D1. A normally open starting switch SW1 bridges the relay terminal S1 for initially energizing the relay, as presently explained. The other relay terminal S2 is connected in series between the gate of the triac 32 and alternating current source wire 27. A normally open override switch SW2 bridges the relay terminal S2 for continuing the cooking cycle as presently explained. It is believed obvious the relay D1 may be replaced by a solid state switching circuit to accomplish the same function.

In the operation of the circuit 30 and assuming food 28 has been placed between the electrodes 22-23 and 24, the cooking cycle is started by momentarily closing the starting switch SW1 which energizes the coil of relay D1 and holds its terminals S1 and S2 closed. Relay terminal S1 maintains the relay energized until the transistor Q1 is rendered non-conductive. Closed relay terminal S2 applies current to the gate of the triac 32 to render it conductive and current through the primary of transformer T1 thus completing a circuit through the food 28. As amperage increases, as a result of the resistance of the food, and, as shown by the curve 29 of Fig. 2, the rectified current from the secondary winding of the transformer T1, detected by the differentiating circuit 36, is in turn fed to the comparator 44 which biases the base of the transisjtor Q1 to maintain it conductive and relay D1 energized. When the food 28 is cooked and the current simultaneously reaches its peak the differentiating circuit 36 sends a zero signal to the comparator circuit 44. As the current declines the output signal of the comparator circuit biases the transistor Q1 to render it nonconductive thus de-energizing relay D1 and terminating the cooking operation by rendering the triac 32 nonconductive.

In the event it is desired to further cook the food stuff, current may again be applied to the electrodes by manually closing the override switch SW2 to render the triac 32 conductive. In this event the switch SW2 must be maintained closed to continue the cooking for a desired time interval.

The circuit 30' of Fig. 4 is substantially identical to the circuit of Fig. 3, modified to permit preselection of the cooking cycle between "rare" and "well done" of the food 28.

In Fig. 4, voltage from the rectifier 34 is divided by the resistors R1 and R2 and filtered by the capacitor C1 and applied to the differentiating circuit 36'. This circuit 36' is designed to differentiate input signals in the vicinity of .00833 Hertz for detecting not only the peak current value but points in the curve 29 of Fig. 2 occurring just before and following the peak of the cooking current curve (which approximates the first half of a sine wave). A zero crossing of the differentiated input signal will now coincide with the current peak in the cooking cycle.

Since gain increases with frequency in a differentiation amplifier resulting in noise which may interfere with the intended signal at the output of the amplifier, a capacitor C2 is added to the feedback circuit of the amplifier 38' which has the effect of leveling off the high end of the frequency response curve.

A buffer curcuit 48 is connected with the differentiating circuit 36' for isolating the differentiating circuit from the low-pass filter circuit 50 connected with the buffer circuit 48 and in turn connected to the comparator circuit 44'. The filter circuit 50 removes any frequency component that is very much about 20 Hertz. This is accomplished by positive feedback of the high frequency components, 180° out of phase, in this operational am plifier circuit wired as a voltage follower in which gain=1.

The comparator circuit 44', which may be called a doneness detection circuit includes the amplifier 46 wired for a very high gain in which a positive feedback is used to provide a measure of hysteresis (stability during transitions). The voltage of the negative input pin 9 is the reference voltage which determines whether or not termination of cooking occurs before, during or after the current has reached its peak. If this reference voltage is set at zero volt (grounded) the comparator output will kick high (stop cooking) at the peak of the current curve. By setting the voltage at some negative value the comparator output will kick high prior to the current peak and correspondingly will kick high just after the current peak if the reference voltage is set to a positive voltage value.

Through experience I have found that -.75 volts to +.25 volts provides a good range of rare to well-done of the food being cooked.

Accordingly, a potentiometer P1, having its wiper arm 52 connected with pin 9, serves as a doneness control. A second potentiometer P2 is connected in series with the potentiometer P1 and serves as an adjustment for shifting the 1 volt wide window at pin 9 toward rare or toward well-done. Resistors R4 and R5, respectively, connected in series with the potentiometers P1 and P2 and respectively connected with a direct current source 55, to be presently described, determine in conjunction with the overall resistance value of potentiometer P1 the size (approximately 1 volt) of the pin 9 window. A bypass capacitor C4 connects the pin 9 to ground.

Any direct current source may be utilized for the amplifiers and other components of the circuit. By way of example, the circuit 55 includes a second transformer T2 having its primary winding connected with the source wires 26 and 27 with the secondary winding rectified by a full wave rectifier 56. The output of the rectifier 56 is respectively connected with a pair of voltage regulators VR to supply positive and negative voltage connections 57 and 58 where needed in the circuit of either Fig. 3 or 4.

This comparator drive circuit 30' cannot be energized to start the cooking cycle when doneness selection of the food setting of the potentiometer P1 is below a "medium" condition for the food. A low comparator reference setting less than zero volts, at the window of the pin 9, for a rare condition of the food results in a comparator high output or stop cooking signal to the base of transistor Q1. In order to temporarily defeat this function of the comparator circuit 44', a timer circuit 59 is added to the relay starting circuit and connected with the comparator circuit to provide a temporary override of the comparator circuit "off" output signal. The timing circuit 59 includes a timer U connected with the voltage supply 55. The timer is connected with the starting switch SW1 through an inverter transistor Q2. The timer output is connected with the base of a third transistor Q3 having its collector connected with the comparator output and the base of the transistor Q1 and its emitter connected to ground through a resistor R6. When the starting switch SW1 is closed, the timer sends a high signal to the base of transistor Q3 to render it conductive which in turn overrides the output of the comparator circuit 44' and drives the base of transistor Q1 to conduct and ground one end of the relay D1 coil, thus energizing relay D1 so that its terminal S2 biases the gate of the triac 32 to start the cooking cycle while the relay terminal S1 maintains the relay energized. In the first 1.5 seconds of any cooking cycle of this resistance cooker the comparator input signal (pin 10) will quickly fall below the low or rare reference voltage at pin 9 and thereby enable the comparator to maintain the circuit energized and the cooking cycle in operation without further controls by the timer.

Normally open stop switch SW3, connected between the base of the transistor Q1 and the collector of transistor Q3, is connected at its other end to DC source to bias the base of transistor Q1 high and override either the output of the comparator 44' or the transistor Q3 to stop the cooking cycle at the will of the operator.

**Claims**

1. A food cooking control for an electric resistance cooker in which the magnitude of the root mean square value of electrode current generated from an AC source passing through food (28) interposed between electrodes (22, 23, 24) increases until the food is substantially cooked, comprising an electric supply circuit (30, 30'), thyristor means (32) arranged in series in the electric supply circuit (30, 30') for uninterruptedly supplying continuous cycle current to said electrodes while the food (28) is cooking, said thyristor means (32) including a gate control element having an electric gate voltage supply circuit, switch means (S2) in said gate voltage supply circuit for selectively closing and opening the gate voltage circuit and respectively rendering said thyristor means (32) conductive and nonconductive, characterised by current detection means (36) including a differentiating amplifier/comparator circuit (38) connected with the electric supply circuit through a current transformer (T1) for sensing the rate of change of the root mean square value of current through the food as a function of its cooked condition, and, electric switch operator means (36, 40, D1) including an electric circuit (40, 44) interposed between said current detection means (36) and said switch means (S2) for opening the gate of the voltage supply circuit in response to a predetermined rate of change of the root mean square value of the current through the food (28) indicating the end of the cooking process and to a selected cooked condition, i.e. a desired degree of doneness, of the food (28).

2. The food cooking control according to claim 1 in which said switch means (S2) includes a relay (D1) having a coil, and, a starting switch (S1) for initially energizing said relay.

3. The food cooking control according to claim 2 in which said switch operator means (36, 40, 44, D1) circuit includes a first transistor (Q1) connected with one end of the relay coil, and, an amplifier (46) having its output connected with the base of said first transistor (Q1) and forming a sensed current comparator biasing said first transistor (Q1) nonconductive in response to said predetermined current rate of change.

4. The food cooking control according to claim 3 in which said amplifier (46) is characterised by a negative voltage input pin (9) and further including adjustable resistance means (P1) connecting a predetermined voltage potential to said input pin (9) for a rare to well done setting.

5. The food cooking control according to claim 4 and further including timer circuit means (59) including a timer connected with said starting switch (S1) and said electric switch operator means circuit (40, 44) for energizing said relay (D1) when said resistance means (P1) is set at a negative potential, and, a second transistor (Q3) connecting the output of said amplifier (46) and the base of said first transistor (Q1) to ground, said timer being connected with the base of said second transistor (Q3) whereby said timer biases said second transistor (Q3) conductive in response to closing said starting switch.

6. The method of controlling power input during electrical resistance cooking of food, comprising interposing food (28) to be cooked between spaced-apart electrodes (22, 23, 24), uninterruptedly applying continuous cycle electric potential across the electrodes, continually sensing the current passing through the food (28), and, characterised by discontinuing the electrode current in response to a predetermined rate of change of the root mean square value of the current as a function of the cooked condition of the food indicating the end of the cooking process and a selected cooked condition, i.e. a desired degree of doneness, of the food.

7. The method as set forth in claim 7 characterized by ceasing current flow when the rate of change in the root mean square value of the current per time is equal to a selected algebraic value.

8. The method as set forth in claim 8 wherein said selected algebraic value is zero.

9. The method as set forth in claim 8 wherein said selected algebraic value is a negative value.

10. The method as set forth in claim 8 wherein said selected algebraic value is a positive value.

**Patentansprüche**

1. Regelung für das Kochen von Speisen in einem elektrischen Widerstandskocher, bei welcher der Effektivwert des von einer Wechselstromquelle erzeugten Elektrodenstroms, der durch das zwischen Elektroden (22, 23, 24) befindliche Gargut (28) fliesst, solange ansteigt, bis das Gargut im wesentlichen gekocht ist, mit einer elektrischen Speisung (30, 30'), einer in Serie in die elektrische Speisung (30, 30') geschalteten Thyristoranordnung (32) zur ununterbrochenen Speisung der Elektroden mit Vollwellenstrom, während das Gargut (28) gekocht wird, wobei die Thyristoranordnung (32) ein Gatter-Steuerelement mit einer elektrischen Gatterspannungsversorgungsschaltung aufweist, und Schaltmitteln (S2) in dieser Gatterspannungsversorgungsschaltung, zum wahlweisen Schliessen und Oeffnen des Gatterstromkreises und entsprechend zum Durchschalten bzw. Sperren der Thyristoranordnung (32), gekennzeichnet durch Mittel (36) zur Messung des Stroms, die eine über einen Transformator (T1) mit dem Speisestromkreis verbundene Differenzierverstärker-/Komparatorschaltung zur Messung der Aenderung des Effektivwertes des Stroms durch das Gargut als Funktion der Garheit desselben enthalten, sowie elektrische Schaltsteuermittel (36, 40, 44, D1), die eine zwischen die erwähnten Mittel (36) zur Messung des Stroms und die Schaltmittel (S2) geschaltete elektrische Schaltung (40, 44) aufweisen, um das Gatter des Speisestromkreises bei einer bestimmten Aenderungsgeschwindigkeit des Effektivwerts des Stroms durch das Gargut (28), welche das Ende des Kochvorgangs anzeigt, und bei einem vorgewählten Kochzustand, d.h. einem gewünschten Gargrad des Garguts (28), zu öffnen.

2. Regelung für das Kochen von Speisen nach Anspruch 1, worin das Schaltmittel (S2) ein Relais (D1) mit einer Spule und einen Startschalter (S1) zum anfänglichen Erregen des Relais aufweist.

3. Regelung für das Kochen von Speisen nach Anspruch 2, worin das Schaltsteuermittel (36, 40, 44, D1) einen ersten Transistor (Q1) aufweist, der mit dem einen Ende der Relaisspule verbunden ist, sowie einen Verstärker (46), dessen Ausgang an der Basis des ersten Transistors (Q1) liegt und einen Strommesskomparator bildet, welcher den ersten Transistor (Q1) bei der erwähnten bestimmten Aenderungsgeschwindigkeit des Stroms sperrt.

4. Regelung für das Kochen von Speisen nach Anspruch 3, worin der Verstärker (46) durch einen negativen Spannungseingang (9) gekennzeichnet ist, und die weiterhin einen einstellbaren Widerstand (P1) aufweist, der ein bestimmtes Spannungspotential entsprechend einer Einstellung von "saignant" bis "bien cuit" auf den Eingang (9) überträgt.

5. Regelung für das Kochen von Speisen nach Anspruch 4, welche weiterhin eine Zeitschaltung (59) mit einem mit dem Startschalter (S1) und der elektrischen Schaltersteuerungsschaltung (40, 44) verbundenen Zeitgeber aufweist, um das Relais (D1) zu erregen, wenn der Widerstand (P1) auf ein negatives Potential eingestellt ist, und einen zweiten Transistor (Q3), der den Ausgang des Verstärkers (46) und die Basis des ersten Transistors (Q1) erdet, wobei der Zeitgeber mit der Basis des zweiten Transistors (Q3) verbunden ist, wodurch der Zeitgeber den zweiten Transistor (Q3) beim Schliessen des Startschalters durchschaltet.

6. Verfahren zur Steuerung der Eingangsleistung beim elektrischen Widerstandskochen von Speisen, bei welchem das zu kochende Gargut (28) in den Zwischenraum zwischen den Elektroden (22, 23, 24) gegeben wird, ein Vollwellenpotential ununterbrochen den Elektroden zugeführt wird und der durch das Gargut (28) fliessende Strom fortwährend gemessen wird, dadurch gekennzeichnet, dass der Elektrodenstrom bei einer bestimmten Aenderungsgeschwindigkeit des Effektivwertes des Stroms als Funktion des Kochzustandes des Garguts, die das Ende des Kochvorgangs und einen vorgewählten Kochzustand, d.h. einen gewünschten Gargrad der Speise anzeigt, unterbrochen wird.

7. Verfahren gemäss Anspruch 7, dadurch gekennzeichnet, dass der Stromfluss unterbrochen wird, wenn die Aenderungsgeschwindigkeit des Effektivwerts des Stroms in der Zeit gleich einem vorgewählten algebraischen Wert ist.

8. Verfahren gemäss Anspruch 8, bei welchem dieser vorgewählte algebraische Wert Null ist.

9. Verfahren gemäss Anspruch 8, bei welchem dieser vorgewählte algebraische Wert ein negativer Wert ist.

10. Verfahren gemäss Anspruch 8, bei welchem dieser vorgewählte algebraische Wert ein positiver Wert ist.

## Revendications

1. Régulation de la cuisson d'un aliment pour un appareil de cuisson par résistance électrique, dans laquelle la grandeur de la valeur efficace du courant aux électrodes généré par une source de courant alternatif et passant par l'aliment (28) interposé entre les électrodes (22, 23, 24), monte jusqu'à ce que l'aliment soit substantiellement cuit, comprenant un circuit d'alimentation électrique (30, 30'), un dispositif à thyristor (32) disposé en série dans le circuit d'alimentation électrique (30, 30') pour fournir, de manière ininterrompue, du courant à cycles continus aux dites électrodes pendant que l'aliment (28) est cuit, ledit dispositif à thyristor (32) comprenant un élément de contrôle à grille ayant un circuit électrique d'alimentation en tension de grille, un interrupteur (S2) dans ledit circuit d'alimentation en tension de grille pour fermer et ouvrir sélectivement le circuit de tension de la grille et respectivement pour rendre ledit dispositif à thyristor (32) conducteur et non conducteur, caractérisé par des moyens (36) détecteurs de courant comprenant un circuit amplificateur-différenciateur/comparateur connecté avec le circuit d'alimentation électrique par un transformateur de courant (T1) pour détecter la vitesse de variation de la valeur efficace du courant qui passe par l'aliment en fonction de sa condition de cuisson, et des moyens électriques de commande de l'interrupteur (36, 40, 44, D1) comprenant un circuit électrique (40, 44) interposé entre lesdits moyens détecteurs de courant (36) et ledit interrupteur (S2) afin d'ouvrir la grille du circuit d'alimentation en tension lors d'une vitesse de variation déterminée de la valeur efficace du courant passant par l'aliment (28) qui indique la fin du processus de cuisson, et lors d'une condition de cuisson choisie, c'est-à-dire un degré de cuisson voulu de l'aliment (28).

2. Régulation de la cuisson d'un aliment selon la revendication 1, dans laquelle ledit interrupteur (S2) comprend un relais (D1) ayant une bobine, et un interrupteur d'enclenchement (S1) pour exciter ledit relais.

3. Régulation de la cuisson d'un aliment selon la revendication 2, dans laquelle ledit circuit de commande de l'interrupteur (36, 40, 44, D1) comprend un premier transistor (Q1) connecté à une extrémité de la bobine du relais, et un amplificateur (46) dont la sortie est connectée à la base dudit premier transistor (Q1) et qui forme un comparateur de courant détecteur rendant ledit premier transistor (Q1) non conducteur en réponse à ladite vitesse de variation du courant déterminée.

4. Régulation de la cuisson d'un aliment selon la revendication 3, dans laquelle ledit amplificateur (46) est caractérisé par une broche d'entrée à tension négative (9) et comprenant en plus une résistance ajustable (P1) qui relie un potentiel de tension prédéterminé avec ladite broche d'entrée (9) pour permettre un réglage allant de "saignant" jusqu'à "bien cuit".

5. Régulation de la cuisson d'un aliment selon la revendication 4, comprenant en plus un circuit temporisateur (59) comprenant une minuterie connectée audit interrupteur d'enclenchement (S1) et audit circuit électrique de commande de l'interrupteur (40, 44) pour exciter ledit relais (D1) quand ladite résistance (P1) est mise à un potentiel négatif, et un deuxième transistor (Q3) mettant la sortie dudit amplificateur (46) et la base dudit premier transistor (Q1) à terre, ladite minuterie étant connectée à la base dudit deuxième transistor (Q3), ce qui fait que ladite minuterie rend ledit deuxième transistor (Q3) conducteur en réponse à la fermeture dudit interrupteur d'enclenchement.

6. Procédé de régulation de l'alimentation en énergie pendant la cuisson d'un aliment par résistance électrique, comprenant le placement d'un aliment (28) à cuire entre des électrodes espacées (22, 23, 24), l'application ininterrompue d'un potentiel électrique à cycles continus aux électrodes, la détection continue du courant passant par l'aliment (28), et caractérisé par la coupure du courant aux électrodes en réponse à une vitesse de variation déterminée de la valeur efficace du courant en fonction de la condition de cuisson de l'aliment qui indique la fin du processus de cuisson et une condition de cuisson choisie, c'est-à-dire un degré de cuisson voulu, de l'aliment.

7. Procédé selon la revendication 7, caractérisé par le fait que le courant est coupé lorsque la vitesse de variation de la valeur efficace du courant dans le temps est égale à une valeur arithmétique choisie.

8. Procédé selon la revendication 8 dans lequel ladite valeur arithmétique choisie est zéro.

9. Procédé selon la revendication 8 dans lequel ladite valeur arithmétique choisie est une valeur négative.

10. Procédé selon la revendication 8 dans lequel ladite valeur arithmétique choisie est une valeur positive.

FIG.1 (PRIOR ART)

FIG. 2

FIG. 3

EP 0 212 012 B1

FIG. 2A

FIG. 2B

FIG. 4

EP 0 212 012 B1